# DEMANDE DE BREVET EUROPEEN

(11) **EP 4 843 844 A1**
(43) Date de publication de la demande: **25.11.2026**
(21) Numéro de dépôt: 26180759.8
(22) Date de dépôt: 22.05.2026
(51) Int. Cl.: B60T 13/66, B60T 8/17, B60T 17/22, B61H 1/00, B61H 13/00, B61L 15/00, F16D 49/00, F16D 66/00, G01L 5/28, G01M 17/08

(54) **PROCÉDÉ D' ESSAI DE FREINS SUR UN TRAIN, ET WAGON CONÇU À CET EFFET**

(30) Priorité: 22.05.2025 LU 601770
(71) Demandeur: CFL Multimodal s.a., 3437 Dudelange (LU)
(72) Inventeur: Valette, Marc, 57330 Entrange (FR)
(74) Mandataire: Office Freylinger

(57) **Abrégé**

On présente un procédé d'essai de frein de wagon ferroviaire, en particulier intégré à un train, le wagon comprenant au moins un essieu muni de deux roues ;
un dispositif de frein étant associé à au moins une roue (4), ledit dispositif de frein comportant un actionneur pneumatique coopérant avec une semelle (30, 30') qui est pressée contre ladite roue (4) lorsque le frein est actif, la semelle (30, 30') étant fixée à un porte-semelle métallique (20, 20') relié à l'actionneur par une tringlerie, la semelle comportant une face d'appui (34.2) qui est au moins partiellement métallique, et étant accouplée au porte-semelle ;
le procédé comprenant les étapes suivantes :
a) détermination d'une grandeur électrique entre un premier point de mesure situé au niveau du porte-semelle (20, 20') et un deuxième point de mesure situé sur la semelle de frein (30, 30') ;
b) comparaison de la grandeur électrique déterminée, ou d'un paramètre basé sur la grandeur électrique déterminée, avec une valeur de référence ; et
c) détermination, sur la base de la comparaison, d'un statut du dispositif de frein au niveau de la roue (4), ledit statut étant au moins l'un parmi un statut serré et un statut desserré.

## Description

### Domaine technique

La présente invention concerne généralement le domaine du transport ferroviaire, et en particulier le transport ferroviaire de marchandises. Plus particulièrement, la présente invention concerne un procédé permettant la réalisation au moins partiellement automatique d'un essai de freins, et un dispositif pour réaliser un tel essai.

### Etat de la technique

Après la formation du train - c'est-à-dire l'attelage mécanique et pneumatique des wagons d'un train et le réglage correct des dispositifs de changement des freins sur les wagons - il est obligatoire d'effectuer un essai de freins, c'est-à-dire de vérifier le fonctionnement des freins de tous les wagons du train. Pour ce faire, il est possible d'utiliser soit directement une locomotive ou un autre dispositif disposant de l'équipement nécessaire, comme une alimentation en air comprimé et une vanne de frein de tête. Actuellement, l'essai de frein nécessite une à deux personnes. le responsable de l'essai de frein, parcourt tous les wagons du train et vérifie l'ordre des wagons, et l'état des freins de tous les wagons. Le protocole à suivre requiert de vérifier une séquence de fermeture/ouverture des freins. Il vérifie en particulier que les freins sont desserrés respectivement serrés, c'est-à-dire que semelles de freins ne sont plus, respectivement sont, en contact avec la bande de roulement des roues, ou ne sont pas gelées et que les freins à main ne sont pas serrés.

Pour l'ensemble du processus d'essai de freins, le chef de train doit parcourir plusieurs fois l'ensemble du train et vérifier l'ensemble des roues, ce qui prend généralement de 30 à 45 minutes, mais peut prendre beaucoup plus de temps pour les longs trains de marchandises.

Afin de réduire le temps de préparation des trains et d'améliorer la traçabilité et la sécurité, et de réduire considérablement les coûts et d'accélérer le trafic ferroviaire, il serait avantageux de disposer d'un procédé d'essai de freins automatisé, au moins en partie. L'une des difficultés pour résoudre ce problème réside dans le fait que, contrairement aux voitures de voyageurs, les wagons de marchandises ne sont pas reliés électriquement entre eux et qu'il n'existe pas non plus d'alimentation électrique à bord du wagon de marchandises. La commande des freins des wagons est pneumatique et s'effectue par l'intermédiaire d'une conduite d'air comprimé dite conduite générale, traversant l'ensemble du train, qui est couplée aux wagons par des raccords flexibles et qui permet la commande des freins en faisant varier la pression dans la conduite générale.

Le document DE 10 2015 004 590 A1 décrit un système de contrôle automatique des freins des véhicules remorqués composant un convoi de trains de marchandises dans lequel l'état serré ou desserré est déterminé en comparant la pression dans la conduite générale et dans une conduite secondaire, mesurées à l'aide de capteurs de pressions respectifs agencés dans ces conduites. Cette solution est intrusive et nécessite des investissements de la part de tous les détenteurs de wagons, propriétaires ou exploitants, afin de placer les capteurs adéquats au sein des conduites d'alimentation en air.

Le brevet EP 3 619 082 B1 décrit un autre procédé d'essai de freins automatisé, pour lequel chaque wagon est équipé d'une unité d'évaluation qui recueille des informations provenant de plusieurs capteurs placés sur le wagon, notamment un capteur de pression installé sur le cylindre de frein, un capteur de force positionné sur la tringlerie de frein, et un capteur de pression de la conduite générale placé sur la conduite d'air principale du freinage pneumatique. Bien qu'efficace, ce procédé nécessite de lourds aménagements des wagons, notamment concernant le placement des différents capteurs, ce qui complique sa mise en œuvre et génère des coûts additionnels.

Le EP 0 903 514 A1 décrit un système de surveillance de l'état d'un frein pour un véhicule ferroviaire, dans lequel l'état du frein (serré ou desserré) est déterminé en mesurant la résistance électrique entre la semelle de frein et la surface de la roue. Lorsque le frein est desserré, un entrefer existe entre ces deux éléments, ce qui résulte en une résistance électrique élevée. À l'inverse, lorsque le frein est serré, le contact physique entre la semelle et la roue crée un chemin de faible résistance, voire un court-circuit.

### Objet de l'invention

L'objet de la présente invention est de proposer une méthode pour effectuer les essais de frein prescrits, lors de la formation des trains ou après un arrêt prolongé, de manière plus rapide, tout en évitant les inconvénients de l'état de la technique susmentionnés.

### Description générale de l'invention

L'invention a pour but de pallier les inconvénients de l'état de la technique en proposant un procédé et un dispositif d'essai de freins qui offrent une fiabilité et une précision accrues, tout en étant moins sensibles aux conditions environnementales. Pour ce faire, et de manière inventive, l'invention propose une approche fondamentalement différente. Au lieu de mesurer une grandeur électrique entre la semelle de frein et la roue, le procédé selon l'invention effectue cette mesure au sein même de l'ensemble de freinage, plus précisément entre la semelle de frein et le porte-semelle qui la supporte.

Cette configuration présente l'avantage technique décisif d'être indépendante des conditions de surface de la roue et de l'interface de friction. La variation de la grandeur électrique mesurée est directement corrélée à la compression interne exercée par l'actionneur sur l'ensemble semelle/porte-semelle. Cette mesure interne est non seulement mieux protégée des contaminations externes, mais elle constitue également un indicateur beaucoup plus direct et fidèle de l'application réelle d'une force de freinage, et non d'un simple contact.

On élimine ainsi le risque de diagnostics erronés (par exemple, un faux état "desserré" dû à un mauvais contact électrique) qui peuvent survenir avec les méthodes basées sur le contact roue-semelle. L'invention fournit donc une solution non-évidente qui améliore de manière significative la sécurité et la fiabilité des essais de freins automatisés.

Conformément à l'invention, on présente un procédé d'essai de frein de wagon ferroviaire, en particulier intégré à un train, le wagon comprenant au moins un essieu muni de deux roues,
un dispositif de frein étant associé à au moins une roue, ledit dispositif de frein comportant un actionneur pneumatique coopérant avec une semelle qui est pressée contre ladite roue lorsque le frein est actif, la semelle étant fixée à un porte-semelle métallique relié à l'actionneur par une tringlerie, la semelle étant accouplée au porte-semelle et comportant une face d'appui sur celui-ci qui est au moins partiellement métallique.

Le procédé comprend les étapes suivantes :
a. Détermination d'une grandeur électrique entre un premier point de mesure situé au niveau du porte-semelle, et un deuxième point de mesure situé sur la semelle de frein ;
b. Comparaison de la grandeur électrique déterminée, ou d'un paramètre basé sur la grandeur électrique déterminée, avec une valeur de référence ; et
c. Détermination, sur la base de la comparaison, d'un statut du dispositif de frein au niveau de la roue, ledit statut étant au moins l'un parmi un statut serré et un statut desserré.

La présente invention propose ainsi un procédé d'essai de frein qui permet de déterminer un statut du dispositif de frein de manière non invasive, par l'agencement de points de mesure en dehors des conduites pneumatiques du dispositif de frein, et donc sans risque d'altérer les performances dudit dispositif ou d'influer sur la sécurité du wagon (et donc du train comportant le wagon). Cela garantit une sécurité maximale et facilite grandement l'installation sur des wagons existants (retrofit).

La détermination du statut, serré ou desserré, repose sur la comparaison d'une grandeur électrique déterminée entre les deux points de mesure, ou d'un paramètre basé sur (ou déduit de) cette grandeur déterminée, avec une valeur de référence.

De préférence, la grandeur électrique déterminée est la résistance électrique. Si la résistance (ou le paramètre basé sur celle-ci) dépasse un seuil prédéfini (théorique ou expérimental), le statut est déterminé comme étant desserré. A l'inverse, le statut est déterminé comme étant serré lorsque la grandeur électrique déterminée (ou son paramètre dérivé) est inférieure ou égale au seuil prédéfini.

Ainsi, la grandeur électrique déterminée (mesurée) varie en fonction de l'état du dispositif de frein et de la force appliquée, en particulier de si oui ou non le porte-semelle presse la semelle contre la roue (la bande de roulement de la roue) afin de freiner le wagon. La résistance électrique n'est qu'un exemple, et d'autres grandeurs électriques, par exemple liées à la résistance, peuvent être employées.

Comme on le sait, la résistance se déduit de la loi d'Ohm. On peut donc en pratique appliquer un courant continu prédéfini entre les deux points de mesure et mesurer la tension pour en déduire la résistance. Par abus de langage on dit que la résistance est mesurée entre les deux points de mesure.

En résumé, à l'étape b) on procède à une comparaison à un seuil d'une variable qui est une grandeur électrique déterminée (laquelle peut être directement mesurée) ou un paramètre basé sur ladite grandeur électrique déterminée. Une valeur directement mesurée est notamment celle qui est obtenue par un circuit de mesure. L'expression « basé sur » doit se comprendre au sens large, et désigne un paramètre représentatif de la valeur électrique déterminée, par exemple déduit et/ou calculé à partir de la grandeur électrique déterminée. Cela peut être une grandeur électrique associée, par exemple calculée de la loi d'Ohm, (ex. R se déduit de U), ou encore un index qui représente un certain niveau de la grandeur électrique, etc. En pratique, la grandeur électrique déterminée peut donc être la tension ou la résistance.

Sans vouloir être lié par une quelconque théorie, les inventeurs pensent que ces variations sont liées à la compression de l'ensemble de frein lors de l'activation du frein. En effet, la semelle et porte semelle - en contact assez lâche au repos - viennent en contact intime lorsque le frein est actif, favorisant le passage du courant. Ainsi, les inventeurs ont globalement observé une réduction sensible de la résistance électrique à travers l'ensemble semelle et porte semelle lorsque le frein est activé. A l'inverse, la résistance est comparativement élevée si le frein est ouvert (inactif - desserré). La mesure de résistance électrique permet ainsi de déterminer de manière robuste si le frein est serré ou desserré, car il existe une différence importante entre les deux statuts permettant d'en déduire l'état du frein, voire de la force appliquée. En particulier, le rapport entre la résistance mesurée à l'état desserré et celle mesurée à l'état serré est typiquement de l'ordre de 10, voire davantage, permettant une distinction nette et fiable entre les deux états. Ainsi, la variation de résistance n'est pas marginale, mais constitue un signal clair et sans ambiguïté.

Par rapport à des dispositifs connus par exemple de DE 10 2015 004 590 A1, la présente invention propose de déterminer l'état du dispositif de frein directement au niveau de la roue, c'est-à-dire là où le dispositif de frein doit produire son effet. La détermination du statut, serré ou desserré, correspond au statut réel de l'ensemble semelle et porte-semelle, et ne présente pas de risque d'être faussé (i.e. influencé) par une déformation de la tringlerie ou une fuite dans une conduite du système pneumatique en aval des capteurs de pressions tels que présentés dans DE 10 2015 004 590 A1. Ainsi, le procédé d'essai de frein est plus sûr.

La solution de l'invention est également plus sûre que la méthode exposée dans le EP 0 903 514 A1 qui propose une mesure entre la semelle de frein et la surface de la roue. En effet, la fiabilité d'une telle mesure dépend entièrement de la qualité du contact électrique à l'interface entre la semelle et la roue. Cette zone est fortement exposée à des contaminations extérieures (telles que la rouille, l'humidité, la glace, la graisse ou la poussière de frein) qui peuvent isoler électriquement les deux surfaces même lorsqu'elles sont en contact mécanique, ce qui peut fausser le diagnostic de l'état du frein.

Dans le présent texte, l'expression « ensemble semelle et porte-semelle » ou « ensemble de semelle et porte-semelle » sont équivalents et désignent l'association formée par une semelle de frein et son porte-semelle respectif, destinés à être montés sur un dispositif de freinage d'un wagon de transport ferroviaire. Plus précisément, cet ensemble comprend d'une part la semelle de frein (ou simplement semelle) conçue pour entrer en contact avec une surface de freinage, telle qu'une (bande de roulement d'une) roue, afin de générer un effort de freinage par frottement ou friction, et d'autre part le porte-semelle, destiné à supporter la semelle de frein, et à assurer sa fixation mécanique et son actionnement (déplacement vers ou depuis la surface de freinage) par l'actionneur pneumatique.

Lors de l'essai de frein, l'étape a) de mesure est de préférence réalisée avec le dispositif de frein sous pression normale (pression de service), afin de rendre compte de l'état du dispositif de frein, en particulier de l'ensemble semelle et porte-semelle, en conditions réelles. La pression peut être apportée en connectant une locomotive au wagon, ou en connectant le wagon à un dispositif annexe de mise sous pression s'apparentant à une station de gonflage. A titre d'exemple, la pression de service, à la quelle le frein est ouvert peut être de quelques bars, par exemple 5 bars. Si la pression est inférieure à la pression de service (moyennant une marge), le frein va se serrer. Ainsi le terme 'sans pression' peut également se comprendre comme une pression inférieure à la pression de service, c'est-à-dire zéro ou avec une pression résiduelle. Dans l'exemple d'une pression de service de 5 bars, une pression de 4 bars ou moins entraine le serrage du frein.

Selon certains modes de réalisation, la valeur de référence, à laquelle la grandeur électrique déterminée est comparée, est stockée dans une base de données - ou plus généralement dans une mémoire. Alternativement, cette valeur de référence peut être déterminée par une mesure de la grandeur électrique entre les deux points de mesure en l'absence de pression dans le système de frein (i.e. une étape a) réalisée en l'absence de pression), ce qui correspond à un état serré (état par défaut) du dispositif de frein.

Pour récapituler, le procédé selon l'invention vise à vérifier l'état physique réel d'un dispositif de frein, notamment pour s'assurer qu'il correspond bien à l'état qui lui est commandé.

Typiquement, pour initier un essai de frein, le système est d'abord placé dans des conditions où le frein est présumé être à l'état desserré (ouvert). Cet état est commandé, par exemple, en pressurisant la conduite d'air principale à sa pression de régime. Cependant, à ce stade, il s'agit d'un état présumé, car un défaut mécanique ou le gel pourrait maintenir le frein physiquement serré malgré la commande.

C'est de préférence dans ces conditions que l'étape a) du procédé est réalisée : elle consiste en la détermination d'une grandeur électrique (par exemple, la résistance) entre le porte-semelle et la semelle. Cette étape fournit une mesure brute, une "photographie" électrique de l'état actuel de l'ensemble de freinage.

L'étape de comparaison b) intervient ensuite pour interpréter cette mesure. Elle consiste à confronter la valeur mesurée à une valeur de référence. Cette valeur de référence représente de préférence la signature électrique attendue d'un frein qui fonctionne correctement et qui est effectivement à l'état desserré.

Si la valeur mesurée est conforme à la référence, l'état "desserré" est confirmé (étape c). Dans le cas contraire (par exemple, si une résistance anormalement basse est mesurée, indiquant un contact forcé), le système conclut que le frein est défaillant et est resté en position "serré".

Cette valeur de référence peut elle-même être un seuil fixe prédéterminé et stocké en mémoire, ou être établie de manière adaptative, par exemple lors d'une phase de calibration initiale sur un frein dont le bon fonctionnement a été vérifié.

Le porte semelle comporte conventionnellement une partie centrale avec un logement d'axe, à partir duquel s'étendent deux bras latéraux encadrant la semelle. Le porte semelle est en métal, typiquement en acier (toute nuance d'acier appropriée).

La semelle a une forme générale d'arc de cercle et comporte sur sa face d'appui une patte d'ancrage reçue dans une encoche du porte semelle. Le porte semelle définit une face d'appui dont la courbure est conçue pour supporter la face d'appui de la semelle.

La garniture de la semelle peut être de toute nature connue de l'homme du métier et autorisée par la réglementation en vigueur là où le train circule. En particulier, la garniture peut être une garniture composite ou en fonte.

Selon des variantes, le premier point de mesure se situe dans une région d'extrémité d'un bras latéral du porte-semelle ; et le deuxième point de mesure se situe sur la patte d'ancrage de la semelle / du support métallique de la semelle.

Un tel agencement des points de mesure permet de maximiser la distance entre ceux-ci, et donc de mieux rendre compte des variations subtiles de comportement électrique de l'ensemble semelle et porte-semelle entre les états serrés et desserrés. La précision de la mesure est ainsi améliorée.

Dans le cas d'une garniture composite, la semelle comprend un support métallique ayant une forme d'arc de cercle dont la courbure est adaptée à celle du porte semelle et de la surface de roulement de la roue. Le support métallique comporte une face concave qui porte la garniture et une face convexe avec la patte d'ancrage, qui constitue la face d'appui de la semelle.

La garniture est en matériau composite, le support métallique est donc distinct de la garniture, i.e. il n'est pas formé du même matériau que celle-ci, mais la garniture y est accouplée, en particulier fixée, de préférence de manière permanente (i.e. non amovible), par exemple par collage ou soudure.

Lorsque la garniture est en fonte, la semelle est entièrement en fonte. C'est une pièce moulée en une seule pièce, de préférence avec la patte d'ancrage.

Selon certains modes de réalisation, la patte d'ancrage peut être simple ou double, ou se présenter sous la forme d'un U inversé. Elle peut être fixée de toute manière connue de l'homme du métier au support métallique, mais elle est de préférence métallique et intégrée au support métallique i.e. formée de manière intégrale avec le support métallique (par exemple coulée avec ou soudée au support métallique) de sorte à mieux répartir les efforts mécaniques et minimiser les points de faiblesse au niveau d'un éventuel raccord entre patte d'ancrage et support métallique.

La patte d'ancrage peut être retenue dans une encoche du porte-semelle par tout moyen connu de l'homme du métier afin d'effectuer un blocage mécanique entre la semelle et le porte-semelle. L'encoche peut être arrangée au niveau de la partie centrale du porte-semelle, et la patte d'ancrage peut y être fixée par une goupille, un ressort de maintien, un clip métallique, une clavette, ou par pression (complémentarité de force).

Préférablement, le dispositif de frein comporte plusieurs ensembles semelle et porte-semelle par wagon, en particulier au moins un par roue ; et de manière particulièrement préférée au moins une roue comporte deux ensembles semelle et porte-semelle. Avantageusement, les étapes a) à c) du procédé sont réalisées pour chaque ensemble semelle et porte-semelle. C'est-à-dire qu'un statut, serré ou desserré, du dispositif de frein est déterminé automatiquement (i.e. sans intervention humaine au-delà de la pose de dispositifs de mesure au niveau des points de mesures) au niveau de chaque ensemble semelle et porte-semelle. Cependant, selon certains modes de réalisation également privilégiés de la présente invention, les étapes a) à c) du procédé sont réalisées pour une partie des ensembles semelle et porte-semelle, par exemple pour un ensemble par essieu, ou un ensemble par roue.

Avantageusement, le statut déterminé parmi un statut serré et un statut desserré du dispositif de frein au niveau de la roue est transmis à un opérateur en particulier en charge de l'essai de frein, par exemple soit physiquement sur le terrain par un système visuel pouvant être lumineux ou mécanique soit via un système digital sur tablette ou tout autre support pertinent. Ainsi, le chef de train n'a plus à parcourir le train afin de vérifier le statut de chaque ensemble de semelle et porte-semelle, mais dispose de ces informations de manière centralisée, de préférence pour l'ensemble des wagons du train concerné. L'essai de frein est plus rapide, et également plus sûr (diminution du risque d'erreur humaine si un ensemble semelle et porte-semelle n'est pas vérifié, ou si le chef de train a un doute concernant le statut d'un ensemble).

Selon certains modes de réalisation, en particulier lorsque les étapes du procédé sont mises en œuvre au niveau de plusieurs ensemble semelle et porte-semelle, et que les données sont transmises à un opérateur, les informations relatives à un statut respectif serré ou desserré du dispositif de frein au niveau de chaque roue / chaque ensemble semelle et porte-semelle sont groupées par essieu, ensemble d'essieux regroupés par bogie ou par wagon avant d'être transmises à l'opérateur.

Selon certains modes de réalisation, lorsque l'essai de frein est concluant, c'est-à-dire qu'aucun blocage de l'ensemble à friction n'est détecté sur les roues du wagon et que le statut respectif du dispositif de frein au niveau de chaque ensemble semelle et porte-semelle est « desserré », les données peuvent être transmises à l'utilisateur à l'échelle du wagon. Attentivement, en cas de défaut sur une ou plusieurs roues (i.e. un statut « serré » pour un ou plusieurs ensemble semelle et porte-semelle), les données peuvent être transmises individuellement par ensemble avec l'identifiant de la ou des roues concernées, permettant ainsi d'indiquer précisément quelles roues présentent un défaut de freinage.

Dans un deuxième aspect, l'invention concerne un wagon, en particulier intégré à un train, comprenant :
- une pluralité d'essieux à deux roues, optionnellement agencés par bogies ,
- un dispositif de frein associé à au moins une roue, ledit dispositif de frein comportant un actionneur pneumatique coopérant avec une semelle qui est pressée contre ladite roue lorsque le frein est actif, la semelle étant fixée à un porte-semelle relié à l'actionneur par une tringlerie, la semelle comportant une garniture sur un support métallique, lequel est accouplé au porte-semelle, et
- une unité de commande reliée à des points de mesure,
dans lequel l'unité de commande est configurée pour réaliser le procédé selon le premier aspect, décrit ci-dessus.

Ainsi, le wagon est configuré pour mettre en œuvre le procédé d'essai de frein selon le premier aspect. Ce qui a été dit pour le procédé s'applique mutatis mutandis au deuxième aspect.

Selon des variantes, des moyens d'affichage, de préférence intégrés à l'unité de commande, sont aptes à afficher les états de fonctionnement (i.e. statut) suivants :
- desserré : correspondant à un état desserré du dispositif de frein, en particulier un état desserré de la semelle de frein par rapport à la roue ; et
- serré : correspondant à un état serré du dispositif de frein, en particulier à un état serré de la semelle de frein sur la roue.

Les moyens d'affichage comprennent préférablement au moins deux diodes électroluminescentes de couleurs différentes, une première diode, de préférence verte, étant allumée lorsque l'état de frein est desserré ; une deuxième diode, de préférence rouge, étant allumée lorsque l'état de frein est serré.

De préférence, l'unité de commande est configurée pour désactiver les moyens d'affichage lorsque le wagon est en mouvement, ce qui permet d'économiser de la batterie. A cet effet, l'unité de commande peut comprendre ou être associée à un à un moyen de détection de mouvement, par exemple un accéléromètre ou tout autre moyen approprié, tel qu'une puce GPS, ou autre, voire si les aspects opérationnels/réglementaires le requiert de pouvoir être commandés à la demande. L'unité de commande est alors configurée pour désactiver les moyens d'affichage lorsqu'elle détermine, sur base du moyen de détection de mouvement, que le wagon est en mouvement.

Avantageusement, l'unité de commande comprend une batterie, de préférence rechargeable par des capteurs photovoltaïques associés.

Selon les mêmes ou d'autres modes de réalisation, l'unité de commande comprend un module de radiocommunication qui permet de communiquer sans fil avec un serveur distant, en particulier qui permet de transmettre des données reflétant l'état serré ou desserré du dispositif de frein (de l'ensemble semelle et porte-semelle).

Selon certains modes de réalisation, l'unité de commande comprend des moyens de fixation configurés pour fixer l'unité de commande au wagon. Ceux-ci peuvent prendre toute forme apte à permettre une fixation et un enlèvement rapide et non intrusif de l'unité de commande, comme par exemple l'utilisation d'aimants ou tout autre système adéquats dans le respect des contraintes de sécurité ferroviaire.

Selon les mêmes ou d'autres modes de réalisation, les deux points de mesure sont liés à l'unité de commande par des conducteurs électriques, les conducteurs électriques étant fixés à la semelle, respectivement au porte semelle, de manière amovible ou permanente, préférablement par clipsage, encliquetage, serrage, vissage ou soudure, plus préférablement de manière facilement détachable par clipsage, encliquetage, serrage ou vissage en tenant compte des conditions dans lequel l'ensemble semelle et porte-semelle est utilisé. La fixation des conducteurs électriques est rapide et non intrusive, de sorte que les conducteurs électriques puissent être démontés puis remis en place lors des opérations de maintenance de l'ensemble semelle et porte-semelle, en particulier lors d'un changement de la garniture de semelle.

Préférablement, le wagon comporte un ou plusieurs dispositifs de frein associés à plusieurs ensembles semelle et porte-semelle respectifs, en particulier au moins un par roue, et dans lequel la majorité des roues ont leur ensemble semelle et porte-semelle relié à l'unité de commande respective de sorte à permettre la détermination du statut de frein.

Ainsi, l'état (serré ou desserré) du dispositif de frein peut être déterminé pour chaque roue munie d'un ensemble semelle et porte-semelle doté de points de mesure, et de préférence pour chaque ensemble semelle et porte-semelle de chaque roue.

Selon certains modes de réalisation, une unité de commande respective est associée à chaque ensemble de semelle et porte-semelle, i.e. à chaque paire de points de mesure. Alternativement, le wagon peut comprendre une (seule) unité de commande centrale configurée pour mesurer une grandeur électrique par ensemble de semelle et porte-semelle (i.e. par paires de points de mesure), comparer chaque grandeur électrique déterminée avec une valeur de référence, et déterminer un statut (serré ou desserré) sur base de la comparaison pour chaque ensemble semelle et porte semelle équipé d'une paire de points de mesure. Il est également envisageable de prévoir une unité de commande par essieux, ou par ensemble d'essieu regroupés en bogie, de façon à atteindre un compromis entre le nombre d'unités de commandes nécessaires d'un côté, et les contraintes physiques (optimisation de la place, longueur des connections...) résultant du raccordement d'une unité centralisée à l'ensemble des paires de points de mesure d'un wagon.

Avantageusement, une unité de traitement, de préférence intégrée à une unité de commande (ou à l'unité de commande unique selon certains modes de réalisation), peut être présente et configurée pour déterminer et transmettre à un utilisateur l'un parmi : un état de frein par roue, un état de frein par essieu, un état de frein par ensemble d'essieux éventuellement regroupés par bogie et un état de frein par wagon, l'état de frein étant choisi parmi un état serré et un état desserré.

En d'autres termes, selon certains modes de réalisation, chaque roue peut être équipée d'un boîtier de commande capable de communiquer, c'est-à-dire de transmettre à un utilisateur l'état de l'ensemble semelle et porte-semelle (c'est-à-dire du dispositif de frein) au niveau de ladite roue. Toutefois, selon certains modes de réalisation, une unité de traitement, par exemple par wagon, compile les données reçues de chaque roue avant de les associer à un identifiant permettant de déterminer leur origine, puis les transmet à l'utilisateur sous différentes formes : par roue, par essieu, par ensemble d'essieux (bogie) ou par wagon.

En particulier, lorsque l'essai de frein est réalisé, c'est-à-dire que le système détecte l'état serré ou desserré d'un ensemble semelle et porte-semelle, les données peuvent être transmises à l'utilisateur à l'échelle du wagon. En cas de défaut sur une ou plusieurs roues, les données sont transmises avec l'identifiant de la ou des roues concernées ou de l'essieu ou du groupement d'essieu (par exemple bogie), permettant ainsi d'indiquer précisément quelles roues présentent un défaut de freinage.

### Description détaillée à l'aide des figures

D'autres particularités et caractéristiques de l'invention ressortiront de la description détaillée d'au moins un mode de réalisation avantageux présenté ci-dessous, à titre d'illustration, en se référant aux dessins annexés. Ceux-ci montrent :
Fig. 1 : un schéma de principe d'une installation de freins d'un véhicule ferroviaire ;
Fig. 2 : une vue rapprochée de la Fig. 1 d'une roue dotée de deux ensembles semelle et porte-semelle pour réaliser le procédé selon la présente invention ;
Fig. 3 : une vue rapprochée explosée de la Fig. 2 au niveau d'un ensemble semelle et porte-semelle ;
Fig.4 : une vue de principe d'un train équipé de wagons pour mettre en œuvre le procédé selon la présente invention.

Sur les figures, les mêmes signes de référence désignent des éléments identiques ou similaires.

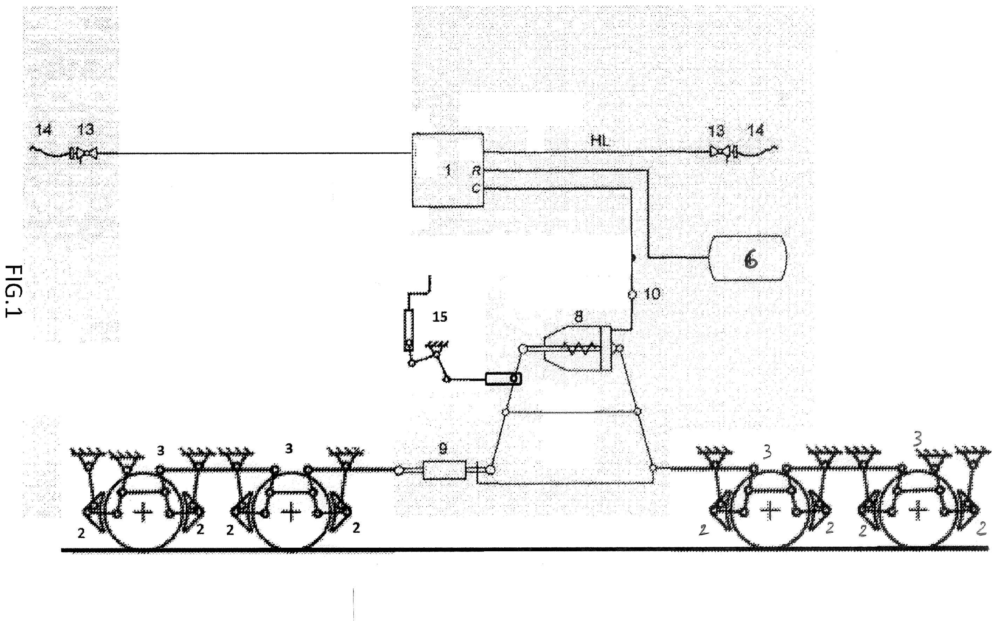

La figure 1 représente schématiquement la structure d'une installation de frein pneumatico-mécanique (ou pneumatique-mécanique) d'un véhicule ferroviaire. Le véhicule ferroviaire n'est pas représenté ; il peut s'agir par exemple d'un wagon de transport de marchandise. Sur la figure 1, le wagon comporte quatre essieux à deux roues, regroupés par paires (le cas échéant montés sur un bogie).

Le frein pneumatique-mécanique repose sur le principe du frein à air comprimé indirect, dans lequel, par modification de la pression dans une conduite d'air principale HL, qui est à la fois la conduite d'alimentation et la conduite de commande provenant d'une locomotive d'un train contenant le véhicule ferroviaire, une soupape de commande de frein 1 reliée à la conduite d'air principale HL est commandée de telle sorte que la soupape de commande de frein 1 commande une pression de cylindre de frein (pression C) 10 en fonction de la pression dans la conduite d'air principale HL, la pression de cylindre de frein 10 étant transformée dans un cylindre de frein 8 en une force mécanique qui est transmise par l'intermédiaire de composants mécaniques du frein, tels que par exemple la tringlerie de frein 3 et le régleur de tringlerie de frein 9, à un ensemble à friction 2 (comprenant une semelle et un porte-semelle, également appelé ensemble semelle et porte-semelle) et génère ainsi la force de freinage du frein. Ainsi, le frein peut être appliqué ou desserré sur chaque wagon du train - couplé par des accouplements de frein 14 et lorsque le robinet d'arrêt d'air 13 est ouvert - via la conduite d'air principale HL.

Un tel frein pneumatico-mécanique est dit « frein indirect » car lorsque la pression dans la conduite d'air principale HL diminue, la valve de commande de frein 1 augmente la pression du cylindre de frein 10. Cela sert à la sécurité, et permet de freiner le train en cas de chute de pression non souhaitée dans la conduite d'air principale HL, par exemple en raison d'une fissure dans la conduite ou d'un embrayage de frein 14 défectueux. La valve de commande de frein 1 reçoit l'air comprimé nécessaire à la génération de la pression C d'un réservoir d'air 6 (réservoir R), qui est alimenté en air comprimé par la conduite d'air principale HL.

Il existe en outre la possibilité d'appliquer un frein de stationnement 15 (frein à main) par l'intermédiaire d'un dispositif (par exemple au moyen d'un volant, d'une manivelle) et de générer ainsi une force dans la tringlerie de frein 3, afin de pouvoir arrêter le wagon sans air comprimé en le freinant pendant une durée prolongée.

Une force dans la tringlerie de frein 3 peut donc résulter aussi bien de la force générée par la pression du cylindre de frein 10 dans le cylindre de frein 8 que de la force exercée par le frein de stationnement 15.

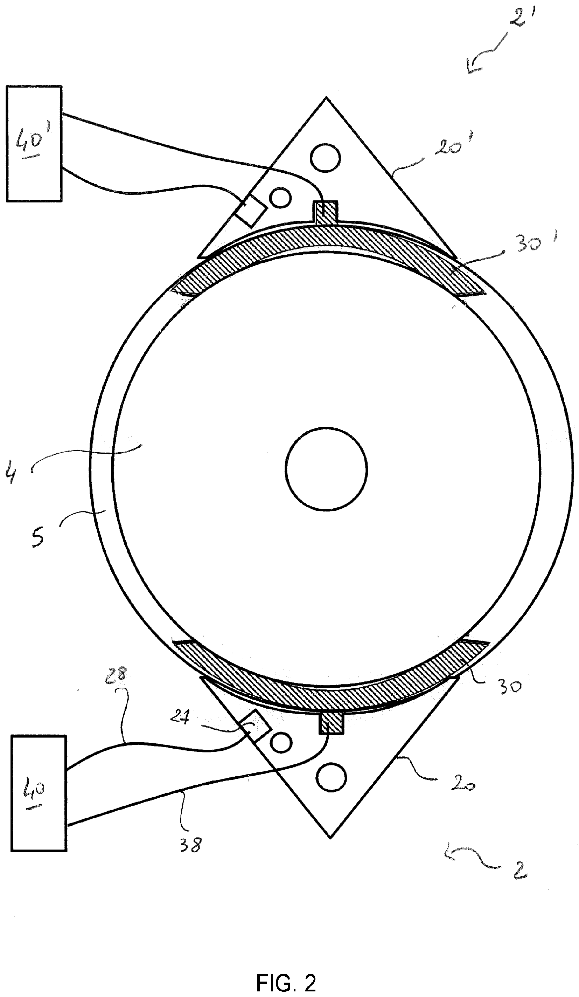

Le dispositif de frein comprend plusieurs ensembles à friction, et comme on le voit sur la Fig. 2, deux ensembles semelle et porte-semelle 2, 2' sont généralement associés à chaque roue. Ils sont de construction similaire, agencés de part et d'autre de la roue dans le sens de la direction de déplacement de la roue et disposés de sorte que leur semelle respective 30, 30' soit pressée contre la bande de roulement 5 de la roue 4 lorsque le frein est actif.

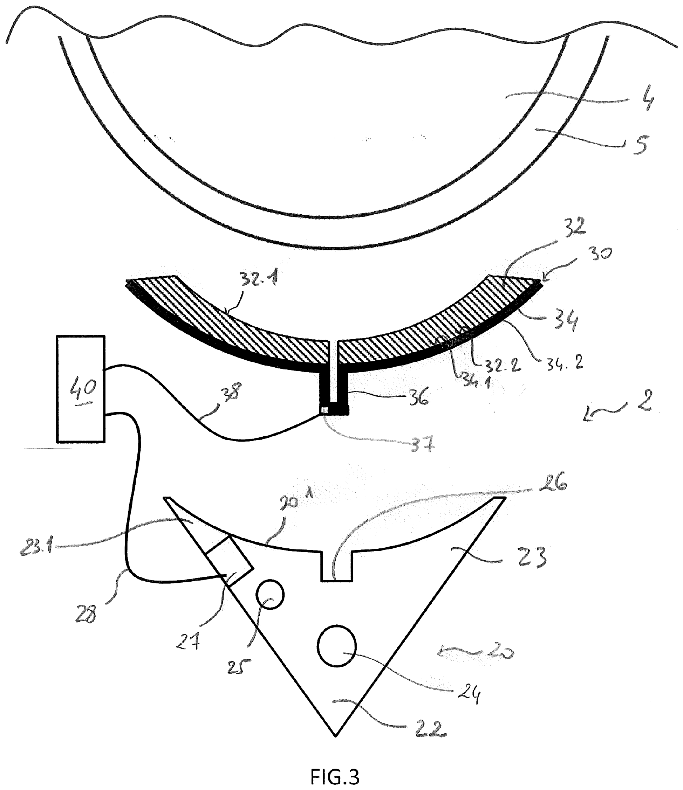

La figure 2 et 3 représente un ensemble à friction 2 classiquement utilisé au niveau des roues 4 d'un wagon de transport ferroviaire, et de plus doté de moyens de mesure d'une grandeur électrique afin de réaliser le procédé selon la présente invention.

Chaque ensemble à friction comporte un porte-semelle 20, 20' qui supporte une semelle de friction 30, 30', ou semelle de frein, ici du type composite. La semelle de frein 30 (ou semelle de friction, ou simplement semelle) est destinée à entrer en contact direct avec la roue, en particulier pour exercer une pression sur celle-ci (au niveau de la bande de roulement) afin de stopper sa rotation. La face avant de la semelle 30 qui vient en contact avec la roue est dite face de friction. La face opposée en regard du porte semelle est dite face d'appui.

Comme on l'observe sur la figure 3, la semelle 30 comprend une garniture 32 ou un patin frottant qui a pour fonction d'entrer en contact avec la roue 4, en particulier la bande de roulement 5. La garniture 32 peut être en tout type de matériau couramment utilisé par l'homme du métier, en particulier en fonte mais de préférence en composite, c'est-à-dire composées d'alliage de poudre de métal et d'additifs à base de polymère (par ex. résine). La garniture 32 comprend une première face 32.1 (face de friction) destinée à entrer en contact direct avec la roue, et présentant une courbure adaptée à celle de la surface de roulement de la roue, et une deuxième face 32.2 opposée à la première face.

La garniture 32 (ou patin) est agencée sur un support métallique 34 de telle sorte que sa deuxième face 32.2 soit au contact du support métallique 34, lequel est accouplé au porte-semelle 20. Le support métallique 34 a une forme d'arc de cercle dont la courbure est adaptée à celle de la surface de roulement 5 de la roue 4 et du porte semelle. Il comporte une face concave 34.1 qui porte (reçoit) la garniture 32 (de préférence composite) et une face convexe 34.2 (la face d'appui) avec une patte d'ancrage 36, reçue dans une encoche 26 du porte-semelle 20. La patte d'ancrage 36 peut être simple ou double. Elle est de préférence formée de manière intégrale avec le support métallique et se présente sous forme de U inversé.

Le porte-semelle 20 est en métal. Il comprend, comme on le voit sur la figure 3, une partie centrale 22 avec un logement d'axe 24, permettant de relier le porte-semelle à un dispositif de support. Le logement d'axe peut se présenter sous la forme d'un orifice traversant, dans lequel s'engage une traverse fixe permettant donc le pivotement du porte-semelle 20.

Le porte semelle et le support métallique sont par exemple en acier, par exemple en acier faiblement allié ou en acier au carbone à haute résistance, ou encore en inox, et de manière générale tout acier approprié.

Le porte-semelle 20 comprend également deux bras latéraux 23 s'étendant de part et d'autre de la partie centrale 22 et encadrant la semelle 30 (garniture 32 + support métallique 34), et une encoche 26 permettant la fixation de la semelle 30, en particulier au niveau de sa patte d'ancrage 36. Un autre logement d'axe 25 situé au niveau d'un des bras latéraux 23 permet de relier le porte-semelle à l'actionneur de frein par une tringlerie, et ainsi actionner le frein.

La patte d'ancrage 36 peut être retenue dans l'encoche 26 par tout moyen connu de l'homme du métier, par exemple une goupille, un ressort de maintien, un clip métallique, une clavette, ou par pression (complémentarité de force).

Comme visible figures 2 et 3, des points de mesure sont agencés respectivement au niveau de la semelle 30 et du porte-semelle 20. Ces points de mesure peuvent prendre la forme de bornes de contact (ou de conducteur électrique) 27, 37, et sont en matériaux électriquement conducteurs. Ces bornes de contact 27, 37 peuvent être fixées de toute manière appropriée de façon à assurer un contact électrique entre la borne et l'élément auquel elle est fixée. Les bornes peuvent par exemple être fixées par clipsage, encliquetage, vissage ou serrage. Selon certains modes de réalisations, les bornes peuvent se présenter sous forme d'un fil électriquement conducteur associé à un clip (ou pince) respectif, qui s'enfile par-dessus l'élément correspondant de l'ensemble à friction 2 (ensemble semelle 30 et porte-semelle 20).

Un premier point de mesure est agencé sur le porte semelle 20. Il peut être placé à tout endroit du porte semelle, mais il est de préférence installé de façon à maximiser la distance entre points de mesure en utilisation. Ainsi, il peut être installé dans une région d'extrémité 23.1 d'un bras latéral 23 du porte-semelle 20.

Afin de garantir un contact électrique le meilleur possible entre la première borne de contact 27 et le porte-semelle 20, la peinture recouvrant le porte-semelle 20 peut être localement retirée à l'emplacement du premier point de mesure (emplacement d'installation de la première borne 27).

Le deuxième point de mesure, sous forme d'une borne de contact 37 de construction similaire à celle 27 agencée au premier point de mesure, est agencé sur la semelle 30 au niveau du support de semelle 34, par exemple par fixation par clipsage d'un fil électriquement conducteur au niveau de la patte d'ancrage 36 du support métallique 34.

Chaque point de mesure est respectivement relié à une unité de commande 40 par un câblage électrique 28, 38, protégé par une gaine. La gaine peut être faite de tout matériau connu de l'homme du métier résistant aux intempéries et aux fortes chaleurs.

L'unité de commande 40 est configurée pour mesurer une grandeur électrique au niveau de chaque point de mesure et de déterminer, sur base de ces grandeurs, un statut parmi un statut serré et un statut desserré du dispositif de frein (de l'ensemble 2 semelle 30 et porte-semelle 20 au niveau de la roue), en comparant la grandeur électrique déterminée, ou un paramètre basé sur celle-ci, à une valeur de référence.

Selon un mode de réalisation préféré mais non limitatif de la présente invention, la grandeur électrique déterminée est la résistance électrique.

Dans un état desserré de l'ensemble à friction 2 (ensemble semelle et porte-semelle), le contact entre les différents éléments est faible, et en particulier la semelle 30 (et donc sa garniture 32) est dans un état non contraint, de sorte que la résistance électrique mesurée entre les deux points de mesure est grande. Dans certaines réalisations, elle peut être de l'ordre de plusieurs centaines d'Ohms (Ω) voir de l'ordre du kΩ.

Lorsque l'ensemble à friction 2 passe dans un état serré, la semelle de frein 30 (en particulier sa garniture 32) est comprimée au contact de la roue 4, pressée contre celle-ci par l'actionneur par le biais du porte-semelle 20. La résistance électrique mesurée entre les deux points de mesure diminue d'un facteur dix ou plus, et peut devenir sensiblement égale à zéro, dans tous les cas pas plus que la centaine d'Ohm.

Sans vouloir être liés par une quelconque théorie, les inventeurs pensent que la force exercée par la tringlerie de frein sur l'ensemble à friction 2 comprime la semelle de frein 30 et le porte semelle 20, de sorte à favoriser la conduction électrique et abaisser la résistance électrique. Tandis qu'à l'état desserré, semelle 30 et porte-semelle 20 étant liés uniquement au niveau de la patte d'ancrage 36, il peut exister un jeu, et donc une couche d'air, entre ces deux éléments, en particulier entre le support métallique 34 de la semelle 30 et la surface de contact 20.1 correspondante du porte-semelle 20, ce qui augmente sensiblement la résistance électrique. Typiquement, un écartement peut exister entre le porte semelle et la semelle à l'état desserré.

La variation de la résistance électrique permet de déterminer un état parmi un état serré et un état desserré de l'ensemble à friction 2 (ensemble semelle et porte-semelle), i.e. du dispositif de frein au niveau de la roue.

Selon certains modes de réalisation non illustrés sur les figures mais partie de la présente invention, il sera apprécié que l'unité de commande peut comprendre des moyens d'affichage associés, par exemple une paire de DEL (diode électroluminescente), intégrées dans la paroi du boitier de l'unité de commande, ou dans un boitier distinct séparé du boitier de l'unité de commande, de sorte à être visibles par un opérateur au sol (de façon commandée par exemple en réponse à une demande de l'opérateur, ou automatique, par exemple en continu), par exemple par un chef de train, qui en passant vérifier manuellement les freins à main des wagons peut contrôler visuellement l'état des frein simplement en passant et sans avoir à effectuer de manipulation au niveau de la roue / ensemble semelle et porte semelle. L'unité de commande est configurée pour gérer les DEL afin de refléter l'état serré ou desserré du frein (i.e. de l'ensemble à friction) au niveau de la roue.

Une des DEL peut être de couleur verte et, lorsqu'elle est allumée, indique le statut 'desserré' du frein. Le choix de la couleur verte n'est un pas un élément caractéristique ou constitutif de la présente invention et peut suivant les préconisations règlementaires et/ou les préférences de l'utilisateur être amené à évoluer vers une autre couleur.

L'autre DEL peut être de couleur rouge et, lorsqu'elle est allumée, indique, l'état 'serré' du frein (i.e. de l'ensemble à friction). De même que la DEL verte, ici le choix de la couleur rouge n'est un pas un élément caractéristique ou constitutif de la présente invention et peut suivant les préconisations règlementaires et/ou les préférences de l'utilisateur être amené à évoluer vers une autre couleur.

On notera que l'unité de commande 40 est typiquement une unité à microprocesseur apte à traiter les signaux électriques reçus, correspondant aux mesures effectuées au niveau des deux points de mesure, évaluer ces signaux afin de déterminer une résistance électrique entre les deux points de mesure, et déterminer le statut (ou état) du dispositif de frein au niveau d'une roue. Les différentes fonctionnalités sont obtenues par des éléments de matériel et/ou des éléments de code de programme d'ordinateur.

L'unité de commande est conçue pour être autonome, alimentée par batterie. Les batteries peuvent être connectée à un système de charge associé à des capteurs photovoltaïques montés sur le wagon ou tout autre système de recharge.

Selon certains modes de réalisation, chaque roue peut être équipée d'un boîtier de commande capable de communiquer, c'est-à-dire de transmettre à un utilisateur l'état de (des) l'ensemble à friction (c'est-à-dire du frein) au niveau de ladite roue. Toutefois, il est également envisageable, et cela fait partie de la présente invention, d'ajouter une unité de traitement, par exemple par wagon, pour compiler les données reçues de chaque roue. Ces données sont ensuite associées à un identifiant permettant de déterminer leur origine, puis transmises à l'utilisateur sous différentes formes : par roue, par essieu, par bogie ou par wagon.

En particulier, lorsque l'essai de frein est réalisé, c'est-à-dire que la situation de l'état de freinage est détectée sur les roues du wagon, les données peuvent être transmises à l'utilisateur à l'échelle du wagon. En cas de défaut sur une ou plusieurs roues, les données sont transmises avec l'identifiant de la ou des roues concernées, permettant ainsi d'indiquer précisément quelles roues présentent un défaut de freinage.

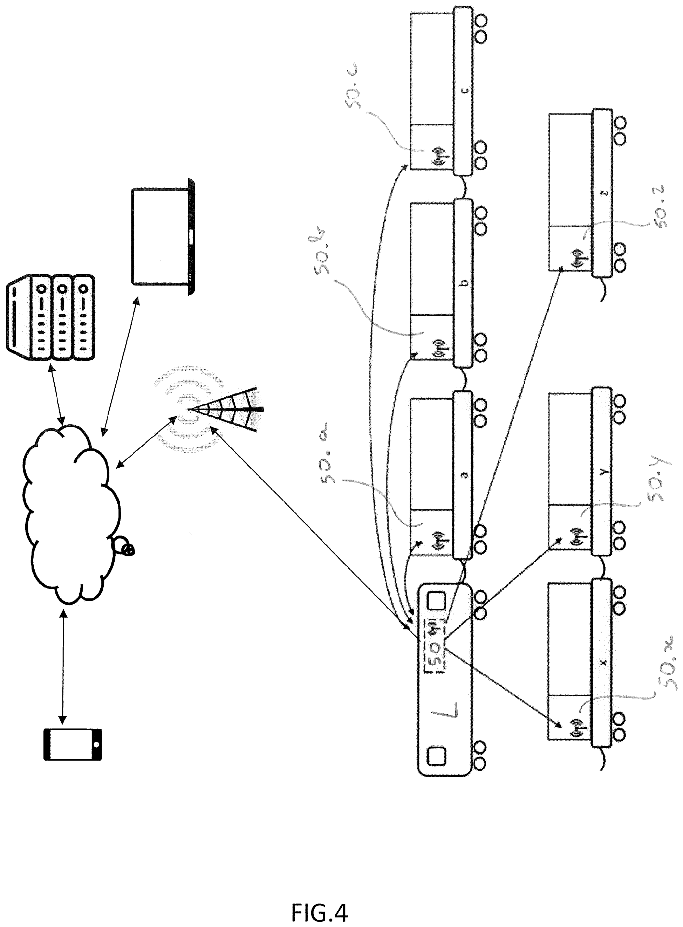

La figure 4 illustre schématiquement la communication entre une unité de traitement 50.a, 50.b, 50.c, ... associée à chaque wagon équipé d'un dispositif capteur selon l'invention (en particulier les wagons a, b, c, ..., reliés à une locomotive L selon une liste de wagons formant un train) et une unité de traitement (à microprocesseur) centrale 50 située au niveau de la locomotive L. Cette communication s'effectue via un réseau radio local établi au moyen de dispositifs de communication (intégrés aux différentes unités de traitement). La formation du train repose sur les numéros de train et les listes de wagons correspondantes, avec un ordre d'attelage déterminé. Une fois la liaison établie entre l'unité de traitement centrale 50 et les unités de traitement respectives 50.a, 50.b, 50.c, ... des wagons a, b, c, ..., la communication s'effectue entièrement via le réseau radio local. De plus, ces unités de traitement peuvent servir de stations relais pour acheminer le signal des derniers wagons x, y, z à la locomotive L.

Avantageusement, l'unité de traitement 50 comprend un module de radiocommunication lui permettant également de communiquer avec un nuage informatique ("cloud"), via tout protocole approprié. Selon la figure 4, seule l'unité de commande 50 située au niveau de la locomotive L est représentée comme apte à communiquer avec le nuage informatique. Toutefois, la présente invention envisage également que chaque unité de traitement 50.a, 50.b, 50.c, etc., puisse être connectée au nuage, ou que chaque wagon comprenne une unité de traitement apte à communiquer avec ce dernier.

Le module de radiocommunication peut être configuré pour différents types de communication : une communication train-sol, via des modules de communication disposés le long de la voie lors de l'essai de freins ; une communication avec des antennes ou relais de télécommunication (GSM, LTE, etc.) ; une communication sans fil via des technologies telles que WIFI, WiMAX, bluetooth IEEE, ou autres. Ce module permet à l'unité de traitement de transmettre les différents états ou statuts des freins à un serveur distant. Ce dernier est configuré pour stocker en mémoire (ou dans une base de données) les informations relatives à l'état des freins des wagons équipés afin de réaliser un procédé d'essai de frein selon l'invention.

Un opérateur multimodal, tel que le chef de train ou le responsable de l'essai de frein, peut accéder à ces informations via un ordinateur ou un appareil mobile (smartphone, tablette, etc.). Cet accès s'effectue en temps réel, à tout moment, au moyen d'une connexion sans fil appropriée permettant d'atteindre le serveur, voire de se connecter directement aux unités de traitements.

Typiquement, chaque unité de traitement est configurée pour envoyer des données comprenant un numéro d'identification de l'unité de commande (respective) associée à une roue et à un wagon dans le serveur, ainsi qu'au moins un état ou statut de frein (serré ou desserré).

## Revendications

1. Procédé d'essai de frein de wagon ferroviaire, en particulier intégré à un train, le wagon comprenant au moins un essieu muni de deux roues ;
un dispositif de frein étant associé à au moins une roue (4), ledit dispositif de frein comportant un actionneur pneumatique coopérant avec une semelle (30, 30') qui est pressée contre ladite roue (4) lorsque le frein est actif, la semelle (30, 30') étant fixée à un porte-semelle métallique (20, 20') relié à l'actionneur par une tringlerie, la semelle comportant une face d'appui (34.2) qui est au moins partiellement métallique, et étant accouplée au porte-semelle ;
**caractérisé en ce que** le procédé comprend les étapes suivantes :
a) détermination d'une grandeur électrique entre un premier point de mesure situé au niveau du porte-semelle (20, 20') et un deuxième point de mesure situé sur la semelle de frein (30, 30') ;
b) comparaison de la grandeur électrique déterminée, ou d'un paramètre basé sur la grandeur électrique déterminée, avec une valeur de référence ; et
c) détermination, sur la base de la comparaison, d'un statut du dispositif de frein au niveau de la roue (4), ledit statut étant au moins l'un parmi un statut serré et un statut desserré.

2. Procédé selon la revendication 1, dans lequel la grandeur électrique déterminée est la résistance.

3. Procédé selon la revendication 1 ou 2, dans lequel
le porte semelle (20, 20') comporte une partie centrale (22) avec un logement d'axe (24), à partir duquel s'étendent deux bras latéraux (23) encadrant la semelle (30, 30') ; et
la semelle a une forme générale d'arc de cercle et comporte sur sa face d'appui (34.2) une patte d'ancrage (36) reçue dans une encoche (26) du porte semelle (20).

4. Procédé selon la revendication 3, dans lequel le premier point de mesure se situe dans une région d'extrémité d'un bras latéral (23) du porte-semelle (20) ; et
le deuxième point de mesure se situe sur la patte d'ancrage (36) de la semelle (30).

5. Procédé selon l'une quelconque des revendications précédentes, dans lequel la semelle est en fonte ou la semelle (30) comporte un support métallique (34) ayant une forme d'arc de cercle dont la courbure est adaptée à celle de la surface de roulement de la roue, et qui comporte une face concave (34.1) qui porte une garniture (32) en matériau composite et une face convexe (34.2) avec une patte d'ancrage (36) ; et préférablement lequel la patte d'ancrage (36) est métallique et intégrée au support métallique (34) .

6. Procédé selon l'une quelconque des revendications précédentes lorsqu'elle dépend de la revendication 3, dans lequel la patte d'ancrage (36) est simple ou double ; et/ou
dans lequel la patte d'ancrage (36) est retenue dans l' encoche (26) du porte semelle (20) par une goupille, un ressort de maintien, un clip métallique ou par pression.

7. Procédé selon l'une des revendications précédentes, dans lequel le dispositif de frein comporte plusieurs ensembles semelle (30, 30') et porte-semelle (20, 20') par wagon, en particulier au moins un par roue ; et de préférence au moins une roue comporte deux ensembles semelle et porte-semelle.

8. Wagon, en particulier intégré à un train, comprenant :
- une pluralité d'essieux à deux roues (4), optionnellement agencés par bogies ;
- un dispositif de frein associé à au moins une roue, ledit dispositif de frein comportant un actionneur pneumatique coopérant avec une semelle (30, 30') qui est pressée contre ladite roue (4) lorsque le frein est actif, la semelle (30, 30') étant fixée à un porte-semelle (20, 20') relié à l'actionneur par une tringlerie, la semelle étant accouplée au porte-semelle et comportant une face d'appui (34.2) sur celui-ci qui est au moins partiellement métallique ;
- une unité de commande (40) reliée à des points de mesure, l'unité de commande (40) étant configurée pour mettre en œuvre le procédé selon l'une quelconque des revendications précédentes.

9. Wagon selon la revendication 8, comprenant en outre des moyens d'affichage, de préférence intégrés à l'unité de commande, aptes à afficher les états de fonctionnement suivants :
- desserré : correspondant à un état desserré du dispositif de frein, en particulier un état desserré de la semelle de frein par rapport à la roue ; et
- serré : correspondant à un état serré du dispositif de frein, en particulier à un état serré de la semelle de frein sur la roue ;
et de préférence dans lequel les moyens d'affichage comprennent au moins deux diodes électroluminescentes de couleurs différentes, une première diode, de préférence verte, étant allumée lorsque l'état de frein est desserré ; une deuxième diode, de préférence rouge, étant allumée lorsque l'état de frein est serré.

10. Wagon selon la revendication 8 ou 9, dans lequel l'unité de commande (40) comprend une batterie, de préférence rechargeable par des capteurs photovoltaïques associés.

11. Wagon selon l'une des revendications 8 à 10, dans lequel l'unité de commande (40) comprend un module de radiocommunication qui permet de communiquer sans fil avec un serveur distant, en particulier de transmettre des données reflétant l'état serré ou desserré du dispositif de freins.

12. Wagon selon l'une des revendications 8 à 11, dans lequel les deux points de mesure sont liés à l'unité de commande par des conducteurs électriques (27, 37), les conducteurs électriques étant fixés à la semelle, respectivement au porte semelle, de manière amovible ou permanente, préférablement par clipsage, encliquetage, serrage, vissage ou soudure.

13. Wagon selon l'une des revendications 8 à 12, dans lequel
le porte semelle (20) comporte une partie centrale (22) avec un logement d'axe (24), à partir duquel s'étendent deux bras latéraux (23) encadrant la semelle (30),
la semelle (30) comprend un support métallique (34) ayant une forme d'arc de cercle dont la courbure est adaptée à celle de la surface de roulement de la roue, et comportant une face concave (34.1) qui porte la garniture (32) et une face convexe (34.2) avec une patte d'ancrage (36) reçue dans une encoche (26) du porte semelle (20) ;
un premier point de mesure est agencé dans une région d'extrémité d'un bras latéral (23) du porte-semelle (20) ; et
un deuxième point de mesure est agencé sur la patte d'ancrage (36) du support métallique (34) de la semelle (30).

14. Wagon selon l'un des revendications 8 à 13, dans lequel le wagon comporte un ou plusieurs dispositifs de frein associés à plusieurs ensembles semelle et porte-semelle respectifs, en particulier au moins un par roue, et dans lequel la majorité des roues ont leur ensemble semelle et porte-semelle relié à l'unité de commande respective de sorte à permettre la détermination du statut de frein.

15. Wagon selon la revendication 14, comprenant en outre une unité de traitement, de préférence intégrée à la/une unité de commande, configurée pour déterminer et transmettre à un utilisateur l'un parmi : un état de frein par roue, un état de frein par essieu, un état de frein par ensemble d'essieux regroupés par bogie et un état de frein par wagon.
